# EUROPÄISCHE PATENTSCHRIFT

(11) **EP 2 942 383 B1**
(45) Veröffentlichungstag und Bekanntmachung des Hinweises auf die Patenterteilung: **09.05.2018**
(21) Anmeldenummer: 15157166.8
(22) Anmeldetag: 02.03.2015
(51) Int. Cl.: C10L 9/08

(54) **VORRICHTUNG ZUR ORTSUNABHÄNGIGEN BEHANDLUNG VON BIOMASSE**
DEVICE FOR LOCATION-INDEPENDENT TREATMENT OF BIOMASS
DISPOSITIF DESTINÉE AU TRAITEMENT DE BIOMASSE INDÉPENDAMMENT DU LIEU

(30) Priorität: 18.03.2014 DE 102014103704
(43) Veröffentlichungstag der Anmeldung: 11.11.2015
(73) Patentinhaber: AVA-Co2 Schweiz AG, 6304 Zug (CH)
(72) Erfinder: Vyskocil, Jan, 6304 Zug (CH); Kusche, Stepan, 76187 Karlsruhe (DE)
(74) Vertreter: Geitz Truckenmüller Lucht Christ

(56) Entgegenhaltungen:
- CA-A1- 2 764 291
- CH-A2- 706 172
- US-A1- 2010 255 582

## Beschreibung

Die vorliegende Erfindung betrifft eine Vorrichtung zur ortsunabhängigen Behandlung von Biomasse.
Das Verfahren der hydrothermalen Karbonisierung stellt einen effizienten Weg zur Verwertung von Biomasse, insbesondere zur Herstellung von Biokohle und anderen im Rahmen der hydrothermalen Karbonisierung entstehenden Produkten dar. Der Karbonisierungsvorgang läuft hierbei unter Zugabe von Dampf in einen Reaktionsbehälter ab, wobei im Inneren des Reaktionsbehälters vorgegebene Umgebungsparameter eingestellt werden müssen. So ist es beispielsweise erforderlich, mit einer erhöhten Temperatur und einem deutlich erhöhten Druck zu arbeiten, so dass die Karbonisierungsreaktion vollständig und energieeffizient ablaufen kann. Das Dokument CH 706 172 A2 offenbart eine Vorrichtung zur Behandlung von Biomasse, umfassend einen Druckbehälter 11 zur Aufnahme der Biomasse aufweist und der von einer Mehrzahl von verdrehbare und ausrückbare Wandungselementen, welche aber nicht in einem Container ausgestattet ist.

Für einen Batch-Betrieb einer Anlage zur Durchführung einer hydrothermalen Karbonisierung werden in der Regel wenigstens ein Vorbehandlungstank und ein Reaktionsbehälter erfordert, bedarfsweise auch ein Abkühlbehälter, in welchen die Biomasse nach Abschluss der hydrothermalen Karbonisierung verbracht wird und abkühlen kann. Aufgrund der zu schaffenden Umgebungsbedingungen in den Behältern ist es erforderlich, die Behälter in einer bestimmten Größe vorzuhalten, so dass insbesondere aufgrund des gewünschten Batch-Betriebs auch ein gewisser Durchsatz einer Anlage erzielt werden kann. Dies legt eine solche Anlage jedoch mehr oder weniger räumlich fest, so dass es erforderlich ist, die Biomasse regelmäßig dort abzuholen, wo sie anfällt und bedarfsweise das entstehende Produkt wieder zurück zum Erzeuger zu verbringen.

Problematisch ist hierbei, dass sich die Biomasse je nach Art während einer Wartezeit oder infolge des Transports verändern kann, insbesondere wenn Gärprozesse einsetzen. Zudem erscheint häufig der Aufwand zu groß, um eine möglicherweise entfernt liegende Anlage zur hydrothermalen Karbonisierung mit der Biomasse anzufahren. Eine flächendeckende Versorgung mit hydrothermalen Karbonisierungsanlagen ist jedoch ebenfalls bislang bei weitem nicht gegeben, so dass die derzeit bereits bestehenden Auslastungsmöglichkeiten für die Verwendung von Biomasse momentan kaum ausreichend genutzt werden.

Die Lösung für ein solches Problem könnte es darstellen, eine hydrothermale Karbonisierungsanlage mobil auszugestalten, um sie zeitweise vor Ort einzusetzen und dann, nach Zulieferung der anfallenden Biomasse aus der umliegenden Umgebung an einen anderen Ort zu verfahren und dort wieder aufzustellen. Dies erscheint jedoch aufgrund der Raumanforderungen der für die Durchführung der hydrothermalen Karbonisierung erforderlichen Geräte und Behälter schwierig zu sein, da diese aufgrund der vorgegebenen Containergrößen bei mobilen Anwendungen lediglich geringe Ausmaße annehmen können.

Vor diesem Hintergrund liegt der vorliegenden Erfindung die Aufgabe zu Grunde, eine Vorrichtung zur ortsunabhängigen Behandlung von Biomasse anzugeben, welche die vorgenannten Probleme löst und eine größtmögliche Variabilität und Anpassbarkeit zusammen mit einer großen Mobilität bietet.

Gelöst wird diese Aufgabe durch eine Vorrichtung zur ortsunabhängigen Behandlung von Biomasse gemäß den Merkmalen des Anspruchs 1. Weitere sinnvolle Ausgestaltungen einer derartigen Vorrichtung können den Unteransprüchen entnommen werden.

Erfindungsgemäß ist vorgesehen, eine Vorrichtung zur ortsunabhängigen Behandlung von Biomasse in einem mobilen Container unterzubringen, wobei dieser Container wiederum seinerseits variabel gestaltet ist. Der Container wird hierbei von einer Mehrzahl von Wandungselementen umschlossen, die zumindest teilweise gegeneinander verschieblich oder um eine Drehachse herum drehbar sind, so dass sich die unterschiedlichen Wände des mobilen Containers durch Ausschieben und Ausklappen zu einer baulichen Erweiterung des mobilen Containers zusammensetzen lassen. Hierdurch ergibt sich durch ein Ausschieben bzw. Ausklappen einzelner Wandungselemente, welche auch im Boden- oder Deckenbereich eines Containers angeordnet sein können, ein deutlich vergrößerter umbauter Raum, welcher entweder mit zusätzlichen Wandungselementen ergänzt werden kann oder alternativ dazu durch ein Aufklappen zuvor mehrschichtig ausgeführter Wandelemente geschlossen wird. Mehrschichtig gestaltete Wandelemente können hierbei ohne Weiteres durch ein gegeneinander Verschieben der einzelnen Wandelemente vergrößert werden oder auch mit randständigen Drehachsen versehen sein, so dass zwei flächig aufeinander liegende Wandschichten durch ein gegenseitiges Verdrehen in einem Winkel zueinander angestellt werden können.

Hierdurch ergibt sich ein gegenüber einem normalen Container deutlich vergrößerter Container, so dass es möglich ist, den mitgeführten Behältern, Geräten und Maschinen innerhalb des Containers einen wesentlich größeren Platz zuzuweisen. Zudem können die Behälter in eine Transportposition gebracht werden, aus der sie in eine Aufstellposition herausgeschwenkt, aufgerichtet und expandiert werden, so dass die Maße der verwendeten Behälter und Gerätschaften die ursprünglichen Maße des Containers ohne Weiteres überschreiten können.

Auch ist es möglich, einzelne Geräte, Behälter oder Maschinen in Gehäuseteile einzusetzen, welche in einem Container aufgenommen sind. Diese Gehäuseteile können dann beispielsweise durch ein Verschieben durch eine Wandöffnung hindurch aus dem Inneren des Containers herausgeschoben werden, bilden mit ihrem Gehäuseteil jedoch dadurch einen, gegebenenfalls auch nur vergrößerten, Teil der Außenwandung des mobilen Containers. Insbesondere ist es auch ohne Weiteres möglich, Behälter und Geräte auf mehrere Container zu verteilen, welche dann an verschiedene Aufgaben angepasst werden können und bedarfsweise miteinander zu verbinden sind.

Für eine derartige Verbindung unter Containern kann jeder Container erste außen liegende Versorgungs- und/oder Durchführungsanschlüsse aufweisen, welche beispielsweise für Dampf und/oder Strom und/oder Wasser vorgesehen sind. Diese ersten außenliegenden Anschlüsse werden durch den Container hindurchgeführt zu einer anderen, beispielsweise gegenüberliegenden Wand des Containers, wo die Anschlüsse in zweite außenliegende Versorgungs- und/oder Durchführungsanschlüsse münden. Auf diese Art und Weise ist ein Durchverbinden der Versorgungsanschlüsse von einem zum nächsten Container ohne Weiteres möglich, auch unabhängig von der jeweiligen Lage der Container zueinander. Soweit die jeweiligen Leitungen auch innerhalb des Containers benötigt werden, so werden diese entlang der innerhalb des Containers verlaufenden Leitungen abgegriffen und den betreffenden Behältern, Geräten und Maschinen zugeführt.

Die einzelnen Leitungen können hierbei an den jeweiligen Außenwänden auf Anschlussplatten oder allgemein Anschlussmitteln zusammengefasst sein, so dass die zwischen den einzelnen mobilen Containern zu verwendenden Verbindungsleitungen ihrerseits lediglich einen oder wenige gemeinsame Stecker besitzen. Beispielsweise kann an einem Stecker eine Dampfleitung, eine Stromleitung und eine Wasserleitung gleichzeitig angeordnet sein, so dass mit einer Leitung eine vollständige Verbindung zweier mobiler Container schnell und einfach hergestellt werden kann.
Grundsätzlich sind verschiedene Konfigurationen der einzelnen Container vorgesehen. Erfindungsgemäß ist der Druckbehälter in einem ersten Container ein Reaktionsbehälter, welcher zur Durchführung einer hydrothermalen Karbonisierungsreaktion vorgesehen und eingerichtet ist. Dem Reaktionsbehälter ist dann unter Zwischenschaltung einer Fördereinrichtung ein Vorbehandlungstank zugeordnet, in welchem die Biomasse in einem Vorbehandlungsschritt homogenisiert und hygienisiert wird. Der Vorbehandlungstank kann hierbei sowohl in demselben Container angeordnet sein, als auch in einem zusätzlichen Container untergebracht werden.
Ebenfalls ist es allerdings möglich, auch lediglich einen Vorbehandlungstank in einem Container unterzubringen, welcher mit Biomasse gefüllt wird, welcher in dem Vorbehandlungstank homogenisiert und hygienisiert wird. Der sich hieraus ergebende Slurry wird dann in ein Transportgefäß verbracht und zu einer gegebenenfalls entfernt liegenden hydrothermalen Karbonisierungsanlage transportiert. Dies hat den Vorteil, dass eine weitere Veränderung der Biomasse vor Ort nicht stattfindet, eine Erstbehandlung der Biomasse also vor Ort geleistet würde und gegebenenfalls die weitere Behandlung zentral an einem anderen Ort durchgeführt wird.
Nachdem der Vorbehandlungstank mit unterschiedlichsten Sorten der Biomasse gefüllt werden kann, können diesem unterschiedliche Zuführeinrichtungen zugeordnet sein. So kann beispielsweise dem Vorbehandlungstank ein Schredder mit einem Zuführmittel, beispielsweise einem Förderband, zugeordnet sein, über welchen die Biomasse in den Vorbehandlungstank verbracht wird. Aber auch ein Einpumpen von Biomasse über eine Zuführpumpe oder auch ein Einbringen über eine Förderschnecke ist im Rahmen der Erfindung ohne Weiteres möglich. Dies erhöht zudem weiter die Variabilität und Flexibilität der hier vorgeschlagenen Anordnung.

Ergänzend zu dem Vorbehandlungstank kann dem Druckbehälter auch ein Abkühlbehälter zugeordnet sein, welcher seinerseits entweder wiederum in demselben oder in einem zusätzlichen mobilen Container aufgestellt wird. Da auch bei der Vorbehandlung eine deutliche Temperaturerhöhung stattfindet und ebenfalls mit einem erhöhten Druck gearbeitet wird, kann der Abkühlbehälter hierbei sowohl einem Vorbehandlungstank als auch einem Reaktionsbehälter zugeordnet sein. In dem Abkühlbehälter wird zum einen die Temperatur der Biomasse, also des Slurry, gesenkt und zum anderen die Druckbeaufschlagung langsam zurückgenommen. Hierbei kann beispielsweise der Abkühlbehälter einen mediendurchströmten Kühlmantel aufweisen, welcher beispielsweise mit Thermoöl gekühlt wird. Das Thermoöl nimmt hierbei im Zuge des Kühlvorgangs Wärme aus dem Abkühlbehälter auf und führt diese ab.

Dem Abkühlbehälter kann ferner eine Trocknungsvorrichtung nachgeschaltet sein, wobei es sich mit besonderem Vorteil um eine beheizte oder eine unbeheizte Kammerfilterpresse handelt. In der Kammerfilterpresse wird die abgekühlte Biomasse zwischen Pressplatten angeordnet, wobei mithilfe von Membranen während des Pressvorgangs in der Biomasse noch enthaltene Flüssigkeit abgesondert wird. Im Falle einer beheizten Kammerfilterpresse können sowohl das Medium als solches als auch die Pressplatten aufgeheizt werden, um den Trocknungsvorgang hierdurch weiter zu beschleunigen. Soweit vorhanden kann beispielsweise das Kühlmedium eines Abkühlbehälters, welches im Abkühlvorgang aufgeheizt wurde, zum Beheizen des Mediums oder auch der Pressplatten der Kammerfilterpresse eingesetzt werden.

Aus Sicherheitsaspekten heraus sollte zumindest dem Container mit dem Reaktionsbehälter und/oder der Kammerfilterpresse eine Luftabsauganlage zugeordnet sein, so dass mit dieser ein Unterdruck in dem mobilen Container erzeugt werden kann. Austretende Dämpfe, Schadstoffe und dergleichen werden hierdurch sofort abgesaugt, auch im Störfall kann mithilfe der Luftabsaugung sichergestellt werden, dass Beeinträchtigungen von Personen vermieden sind.

Das insbesondere im Zuge der Abkühlung und der Trocknung des Slurry anfallende Prozesswasser kann mit einigem Vorteil einer zusätzlichen Prozesswasseraufbereitung zugeführt werden, welche beispielsweise ebenfalls in einem zusätzlichen mobilen Container untergebracht sein kann. Auch weitere Geräte können als separate Geräte oder separate Container, je nach hierfür anfallendem Raumaufwand, zusätzlich vorgesehen sein, so beispielsweise ein mobiler Dampferzeuger. Ohne Weiteres wird im Rahmen der Erfindung jede beliebige sinnvolle Kombination von Geräten in einem Container zusammengeführt, welcher, wie eingangs beschrieben, in seinen Außenmaßen hierbei variabel angepasst werden kann.

Die vorstehend beschriebene Erfindung wird im Folgenden anhand eines Ausführungsbeispiels näher erläutert.

Es zeigen
- Figur 1: einen mobilen Container mit einer Vielzahl von Wandungselementen, welche die Außenmaße des Containers vergrößern, in einem ausgeklappten Zustand in perspektivischer Darstellung,
- Figur 2: eine Mehrzahl von mobilen Containern, welche zu einer Gesamtanlage zusammengefügt worden sind in einer Draufsicht von oben, sowie
- Figur 3: die mobilen Container gemäß Figur 2 in einer seitlichen Schnittdarstellung.

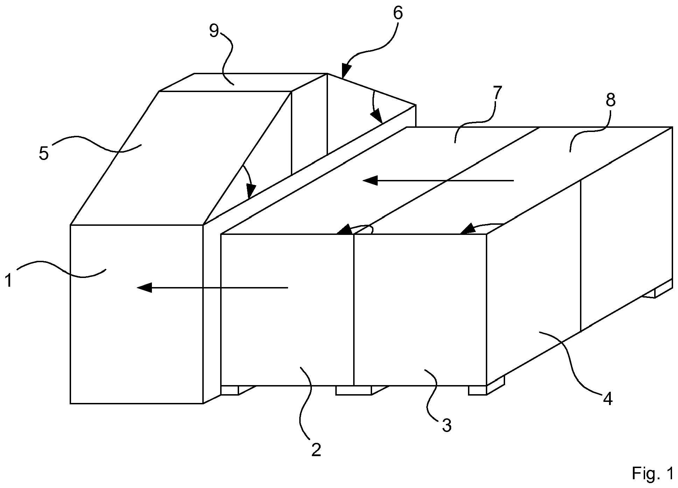

Figur 1 zeigt einen Container 1, welcher mithilfe eines Lastwagens bedarfsweise vor Ort aufgestellt werden kann, wo auch immer Bedarf für die Entsorgung von Biomasse mithilfe einer hydrothermalen Karbonisierungsanlage besteht. Der Container 1 ist derart variabel gestaltbar, dass er verschiedene klapp- und/oder schiebbare Wandungselemente 2 bis 8 aufweist, die den räumlich beschränkten Container 1 deutlich vergrößern lassen. So weist der Container 1 zunächst eine Schubwand 2 auf, welche aus dem Containerinneren heraus zur Seite hin verschoben werden kann. Aus dieser Schubwand 2 herausgeklappt ist eine erste Klappwand 3, der wiederum eine zweite Klappwand 4 angeklappt gewesen ist. In der gezeigten Situation ist der Container 1 vollständig ausgeklappt, so dass die Pfeile in der Figur 1 eine Klapp- oder Schubrichtung angeben, in welche die betreffenden Wände 2 bis 8 wieder zurück in den Container 1 verbracht werden können. Durch Anklappen der zweiten Klappwand 4 an die erste Klappwand 3 und ein anschließendes Umklappen der somit in der Breite verdoppelten ersten Klappwand 3 an die Schubwand 2 werden zwei Wände auf einmal in eine dritte Wand integriert oder an diese angelagert. Diese somit verdreifachte Schubwand 2 kann dann in Richtung des angedeuteten Pfeils in den Container 1 hinein verschoben werden. Ineinander verschiebbare erste und zweite Schubböden 7 und 8 können durch gegenseitiges Verschieben und letztlich ein Gesamtverschieben in den Container 1 hinein ebenfalls verstaut werden. Analoges gilt für die gegenüberliegende Seite des Containers 1 und den Boden.

Auch die Höhe des Containers 1 kann durch ein Aufklappen eines ersten Klappdachs 5 und eines zweiten Klappdachs 6 um einen bestimmten Winkel vergrößert werden, so dass insbesondere in der Containermitte eine höhere Einrichtung untergebracht werden kann. Der sich hieraus ergebende Abstand zwischen dem ersten Klappdach 5 und dem zweiten Klappdach 6 kann durch ein Zwischenstück 9 geschlossen werden, was entweder seinerseits aus den Klappdächern 5 oder 6 herausgeklappt werden kann oder alternativ lose in dem Container 1 mitgeführt und bedarfsweise eingesetzt wird.

Aufgrund dieser Veränderlichkeit des Containers 1 ist es nunmehr möglich, diesen zunächst vor einer Inbetriebnahme mit den zu verwendenden Gerätschaften mehr oder weniger vollständig aufzufüllen und bei einem Aufstellen vor Ort die verwendeten Geräte, Behälter und dergleichen mehr aus dem Container 1 zu entnehmen und in dem entstehenden, vollständig aufgebauten Container 1 in geeigneter Weise zu verteilen.

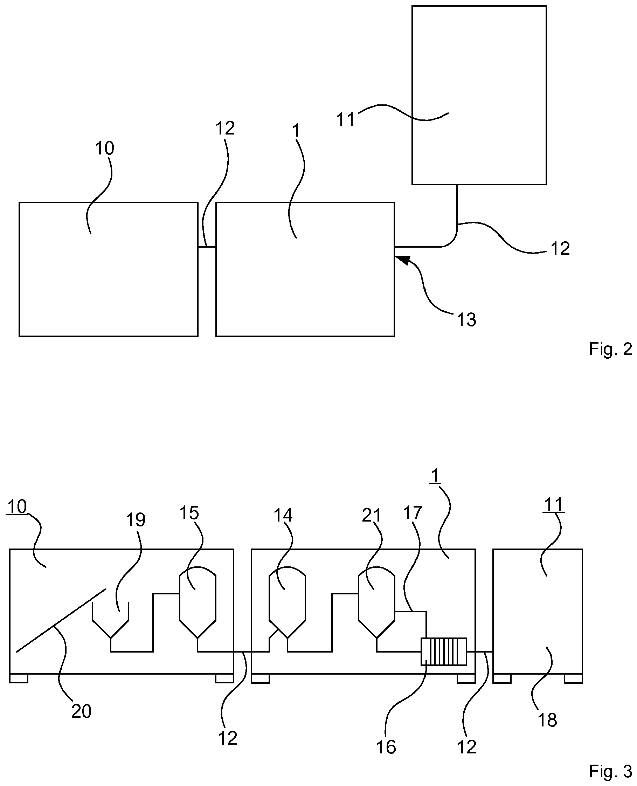

Figur 2 zeigt eine mögliche Anordnung mehrerer Container 1, 10 und 11, wobei in der Darstellung der Figuren 2 und 3 auf eine ausdrückliche Darstellung des Ausklappens verzichtet wird. Hierbei wird zunächst ein erster Container 1 vorgesehen, welcher außenseitig an einer gegenüberliegenden Seite Anschlussplatten 13 aufweist, über die Anschlüsse beispielsweise für Wasser, Dampf und Strom nach außen geführt sind. Mithilfe von Verbindungsleitungen 12 wird hierdurch der Container 1 mit benachbarten Containern 10 und 11 verbunden, wobei es sich bei dem Container 10 um einen Zuführcontainer handelt und bei dem Container 11 um einen Prozesswassercontainer.

Figur 3 beschreibt näher die Funktion der einzelnen Container 1, 10 und 11. So ist in dem vorliegenden Beispiel in dem ersten Container 1 zunächst ein Reaktionsbehälter 14 angeordnet, in welchem die hydrothermale Karbonisierungsreaktion stattfindet. Der aus dem Reaktionsbehälter 14 entnommene Slurry wird über eine entsprechende Verbindung zu dem Abkühlbehälter 21 verbracht, welcher von einem mediendurchströmten Kühlmantel umgeben ist. Aus dem Abkühlbehälter 21 austretender Slurry wird dann in eine Kammerfilterpresse 16 verbracht, welche das Prozesswasser von der Biomasse trennt. Hierbei handelt es sich um eine zur Beschleunigung des Trocknungsvorgangs beheizte Kammerfilterpresse 16, welche mit dem Medium aus dem Kühlmantel des Abkühlbehälters 21 geheizt wird, das über eine Thermoölleitung 17 der Kammerfilterpresse 16 zugeführt wird. Durch eine Verbindungsleitung 12 wird das aus dem Slurry beim Pressen austretende Prozesswasser einer Prozesswasseraufbereitung 18 zugeführt, welche in nicht näher interessierender Art und Weise in dem Prozesswassercontainer 11 angeordnet ist.
Gespeist wird der Reaktionsbehälter 14 aus einem Vorbehandlungstank 15, welcher in dem Zuführcontainer 10 angeordnet ist. In dem Vorbehandlungstank 15 erfolgt eine Homogenisierung und Hygienisierung der Biomasse, welche im vorliegenden Beispiel zunächst über Zuführmittel 20 hier in Form eines Förderbandes einem Schredder 19 zugeführt wird, der die dann zerkleinerte Biomasse in den Vorbehandlungstank 15 einbringt. Unter Beimischung von Dampf und unter Anlegung von Druck und entsprechender Temperatur erfolgt dann die Homogenisierung und Hygienisierung in dem Vorbehandlungstank.

Vorstehend beschrieben ist somit eine Vorrichtung zur ortsunabhängigen Behandlung von Biomasse, welche es erlaubt, variabel ausgestaltete Container mit den jeweils erforderlichen Behältern, Geräten und Maschinen auszustatten um die jeweils erforderlichen Verfahrensteile eines hydrothermalen Karbonisierungsverfahrens vor Ort durchzuführen und bedarfsweise die Durchführung anderer Teile des hydrothermalen Karbonisierungsverfahrens an andere Orte zu verlegen.

### BEZUGSZEICHENLISTE

- 1: Container
- 2: Schubwand
- 3: erste Klappwand
- 4: zweite Klappwand
- 5: erstes Klappdach
- 6: zweites Klappdach
- 7: erster Schubboden
- 8: zweiter Schubboden
- 9: Zwischenstück
- 10: Zuführcontainer
- 11: Prozesswassercontainer
- 12: Verbindungsleitung
- 13: Anschlussplatte
- 14: Reaktionsbehälter
- 15: Vorbehandlungstank
- 16: Kammerfilterpresse
- 17: Thermoölleitung
- 18: Prozesswasseraufbereitung
- 19: Schredder
- 20: Zuführmittel
- 21: Abkühlbehälter

## Patentansprüche

1. Vorrichtung zur ortsunabhängigen Behandlung von Biomasse, umfassend einen mobilen Container (1), welcher einen Druckbehälter zur Aufnahme der Biomasse aufweist und der von einer Mehrzahl von Wandungselementen (2-8) umschlossen ist, welche aus einer Transportposition um wenigstens eine Drehachse herum verdrehbar oder in wenigstens einer Schubrichtung ausrückbar sind und in einer durch Verdrehen oder Ausrücken erreichbaren Aufstellposition ein gegenüber der Transportposition vergrößertes Volumen umschließen,
wobei der Druckbehälter ein Reaktionsbehälter (14) zur Durchführung einer hydrothermalen Karbonisierungsreaktion ist, wobei dem Reaktionsbehälter (14) unter Zwischenschaltung einer Fördereinrichtung ein Vorbehandlungstank (15) zum Homogenisieren und Hygienisieren der Biomasse zugeordnet ist, welcher in demselben mobilen Container (1) oder einem separaten, weiteren mobilen Container (10) angeordnet ist.

2. Vorrichtung gemäß Anspruch 1, **dadurch gekennzeichnet, dass** Wandungselemente (2-8) in der Transportposition mehrschichtig ausgeführt sind, wobei mehrere in der Transportposition übereinander liegende Wandschichten (2-8) gegeneinander verschieblich oder um eine randständige Drehachse gegeneinander verdrehbar sind.

3. Vorrichtung gemäß einem der Ansprüche 1 oder 2, **dadurch gekennzeichnet, dass** in dem Container (1) aufgenommene Einrichtungen von einem Gehäuseteil umschlossen sind, welches aus der Transportposition in die Aufstellposition verschiebbar ist und zumindest in der Aufstellposition einen Teil einer Außenwandung des mobilen Containers (1) bildet.

4. Vorrichtung gemäß einem der vorhergehenden Ansprüche, **dadurch gekennzeichnet, dass** dem Container (1) erste außen liegende Versorgungs- und/oder Durchführungsanschlüsse für Dampf und/oder Strom und/oder Wasser zugeordnet sind, welche zu korrespondierenden zweiten außen liegenden Versorgungs- und/oder Durchführungsanschlüssen an einer anderen Containerwand durchgeführt sind, wobei innerhalb des mobilen Containers (1) benötigte Versorgungs- und/oder Durchführungsleitungen zwischen den ersten und den zweiten Anschlüssen abgegriffen werden.

5. Vorrichtung gemäß Anspruch 4, **dadurch gekennzeichnet, dass** die Versorgungs- und/oder Durchführungsanschlüsse auf einer gemeinsamen Anschlussplatte (13) zusammengefasst sind, wobei mit dieser Anschlussplatte (13) zu verbindende, unterschiedliche Verbindungsleitungen in einen gemeinsamen Stecker münden.

6. Vorrichtung gemäß einem der vorhergehenden Ansprüche, **dadurch gekennzeichnet, dass** dem Vorbehandlungstank (15) in demselben oder einem zusätzlichen mobilen Container (1) ein Schredder (19) und/oder Zuführmittel (20) zum Zuführen von Biomasse in einem Rohzustand zugeordnet sind.

7. Vorrichtung gemäß einem der vorhergehenden Ansprüche, **dadurch gekennzeichnet, dass** dem Druckbehälter ein Abkühlbehälter (21) in demselben oder einem zusätzlichen mobilen Container (1) zugeordnet ist.

8. Vorrichtung gemäß Anspruch 7, **dadurch gekennzeichnet, dass** der Abkühlbehälter (21) einen mediendurchströmten Kühlmantel aufweist.

9. Vorrichtung gemäß einem der Ansprüche 7 oder 8, **dadurch gekennzeichnet, dass** dem Abkühlbehälter (21) eine Trocknungsvorrichtung nachgeschaltet ist.

10. Vorrichtung gemäß Anspruch 11, **dadurch gekennzeichnet, dass** die Trocknungsvorrichtung eine beheizte oder unbeheizte Kammerfilterpresse (16) ist.

11. Vorrichtung gemäß Anspruch 12, **dadurch gekennzeichnet, dass** es sich um eine beheizte Kammerfilterpresse (16) handelt, die mit dem Kühlmittel des Abkühlbehälters (21) beheizt wird.

12. Vorrichtung gemäß einem der vorhergehenden Ansprüche, **dadurch gekennzeichnet, dass** dem mobilen Container (1) eine Luftabsauganlage zur Erzeugung eines Unterdrucks in dem mobilen Container (1) zugeordnet ist.

13. Vorrichtung gemäß einem der vorhergehenden Ansprüche, **dadurch gekennzeichnet, dass** in demselben oder einem zusätzlichen mobilen Container (11) eine Prozesswasseraufbereitung (18) angeordnet ist.

14. Vorrichtung gemäß einem der vorhergehenden Ansprüche, **dadurch gekennzeichnet, dass** in demselben oder einem zusätzlichen mobilen Container (1) ein mobiler Dampferzeuger angeordnet ist.

## Claims

1. A device for location-independent treatment of biomass, comprising a mobile container (1), which has a pressurized container for accommodating the biomass and which is enclosed by a plurality of wall elements (2-8), which are pivotable from a transportation position about at least one axis of rotation or are movable outward into at least one thrust direction and enclose an enlarged volume in relation to the transportation position in a setup position, which is achievable by pivoting or moving outward,
wherein the pressurized container is a reaction container (14) for carrying out a hydrothermal carbonization reaction, wherein a pretreatment tank (15) for homogenizing and sanitizing the biomass, which is arranged in the same mobile container (1) or a separate, further mobile container (10), is associated with the reaction container (14), with a conveyor apparatus interconnected.

2. The device according to Claim 1, **characterized in that** the wall elements (2-8) are embodied as multilayered in the transportation position, wherein a plurality of the wall layers (2-8) lying one on top of another in the transportation position are displaceable in relation to one another or are pivotable in relation to one another about an axis of rotation at the edge.

3. The device according to any one of Claims 1 or 2, **characterized in that** apparatuses accommodated in the container (1) are enclosed by a housing part, which is displaceable from the transportation position into the setup position and forms a part of an outer wall of the mobile container (1) at least in the setup position.

4. The device according to any one of the preceding claims, **characterized in that** first external supply and/or feedthrough fittings for steam and/or current and/or water are associated with the container (1), which are led through to corresponding second external supply and/or feedthrough fittings on another container wall, wherein supply and/or feedthrough lines required inside the mobile container (1) are tapped between the first and the second fittings.

5. The device according to Claim 4, **characterized in that** the supply and/or feedthrough fittings are combined on a common fitting plate (13), wherein different connecting lines to be connected to this fitting plate (13) discharge into a common plug.

6. The device according to any one of the preceding claims, **characterized in that** a shredder (19) and/or supply means (20) for supplying biomass in a raw state are associated with the pretreatment tank (15) in the same or an additional mobile container (1).

7. The device according to any one of the preceding claims, **characterized in that** a cooling container (21) is associated with the pressurized container in the same or an additional mobile container (1).

8. The device according to Claim 7, **characterized in that** the cooling container (21) has a cooling jacket through which media flow.

9. The device according to any one of Claims 7 or 8, **characterized in that** a drying device is connected downstream from the cooling container (21).

10. The device according to Claim 11, **characterized in that** the drying device is a heated or unheated chamber filter press (16).

11. The device according to Claim 12, **characterized in that** it is a heated chamber filter press (16), which is heated using the coolant of the cooling container (21).

12. The device according to any one of the preceding claims, **characterized in that** an air exhaust system for creating a partial vacuum in the mobile container (1) is associated with the mobile container (1).

13. The device according to any one of the preceding claims, **characterized in that** a process water preparation unit (18) is arranged in the same or an additional mobile container (11).

14. The device according to any one of the preceding claims, **characterized in that** a mobile steam generator is arranged in the same or an additional mobile container (1).

## Revendications

1. Dispositif destiné au traitement de biomasse indépendamment du lieu, comprenant un conteneur mobile (1) qui présente un récipient sous pression destiné à recevoir la biomasse et qui est entouré par une pluralité d'éléments de paroi (2-8), lesquels peuvent, à partir d'une position de transport, être tournés autour d'au moins un axe de rotation ou déployés dans au moins une direction de poussée et renferment, dans une position d'installation atteignable par rotation ou déploiement, un volume plus important que dans la position de transport,
dans lequel le récipient sous pression est un récipient de réaction (14) destiné à effectuer une réaction de carbonisation hydrothermale, dans lequel un réservoir de prétraitement (15) destiné à homogénéiser et hygiéniser la biomasse est associé au récipient de réaction (14) avec interposition d'un équipement de transport, lequel réservoir de prétraitement est disposé dans le même conteneur mobile (1) ou un autre conteneur mobile séparé (10).

2. Dispositif selon la revendication 1, **caractérisé en ce que** les éléments de paroi (2-8) sont réalisés en plusieurs couches dans la position de transport, plusieurs couches de paroi (2-8) superposées dans la position de transport pouvant coulisser l'une par rapport à l'autre ou tourner l'une par rapport à l'autre autour d'un axe de rotation situé au bord.

3. Dispositif selon l'une des revendications 1 ou 2, **caractérisé en ce que** des équipements reçus dans le conteneur (1) sont entourés par une partie carter qui peut coulisser de la position de transport dans la position d'installation et qui, au moins dans la position d'installation, forme une partie de la paroi extérieure du conteneur mobile (1).

4. Dispositif selon l'une des revendications précédentes, **caractérisé en ce qu'**au conteneur (1) sont associés de premiers raccords extérieurs d'alimentation et/ou de passage pour de la vapeur et/ou de courant et/ou de l'eau, lesquels sont acheminés vers des deuxièmes raccords extérieurs d'alimentation et/ou de passage correspondants sur une autre paroi de conteneur, des lignes d'alimentation et/ou de passage nécessaires à l'intérieur du conteneur mobile (1) étant prélevées entre les premiers et deuxièmes raccords.

5. Dispositif selon la revendication 4, **caractérisé en ce que** les raccords d'alimentation et/ou de passage sont regroupés sur une plaque de raccordement commune (13), différentes lignes de raccordement à relier à cette plaque de raccordement (13) débouchant dans un connecteur commun.

6. Dispositif selon l'une des revendications précédentes, **caractérisé en ce qu'**un broyeur (19) et/ou des moyens d'amenée (20) destinés à amener de la biomasse à l'état brut sont associés au réservoir de prétraitement (15) dans le même ou dans un conteneur mobile (1) supplémentaire.

7. Dispositif selon l'une des revendications précédentes, **caractérisé en ce qu'**un récipient de refroidissement (21) est associé au récipient sous pression dans le même ou dans un conteneur mobile (1) supplémentaire.

8. Dispositif selon la revendication 7, **caractérisé en ce que** le récipient de refroidissement (21) présente une enveloppe de refroidissement parcourue par un fluide.

9. Dispositif selon l'une des revendications 7 ou 8, **caractérisé en ce qu'**un dispositif de séchage est placé après le récipient de refroidissement (21).

10. Dispositif selon la revendication 11, **caractérisé en ce que** le dispositif de séchage est un filtre-presse chauffé ou non chauffé (16).

11. Dispositif selon la revendication 12, **caractérisé en ce qu'**il s'agit d'un filtre-presse chauffé (16) qui est chauffé avec le fluide de refroidissement du récipient de refroidissement (21).

12. Dispositif selon l'une des revendications précédentes, **caractérisé en ce qu'**un système d'aspiration d'air destiné à créer une dépression dans le conteneur mobile (1) est associé au conteneur mobile (1).

13. Dispositif selon l'une des revendications précédentes, **caractérisé en ce qu'**un traitement d'eau de processus (18) est disposé dans le même ou dans un conteneur mobile (11) supplémentaire.

14. Dispositif selon l'une des revendications précédentes, **caractérisé en ce qu'**un générateur de vapeur mobile est disposé dans le même ou dans un conteneur mobile (1) supplémentaire.
